# EUROPÄISCHE PATENTANMELDUNG

(11) **EP 4 613 523 A2**
(43) Veröffentlichungstag der Anmeldung: **10.09.2025**
(21) Anmeldenummer: 25159968.4
(22) Anmeldetag: 25.02.2025
(51) Int. Cl.: B60J 7/16, B60P 3/34, B60P 3/39

(54) **AUFSTELLDACH FÜR EIN FREIZEITFAHRZEUG UND FREIZEITFAHRZEUG**

(30) Priorität: 05.03.2024 DE 102024106360; 28.08.2024 DE 102024124547
(71) Anmelder: Erwin Hymer Group SE, 88339 Bad Waldsee (DE)
(72) Erfinder: Hepe, Dominik, 88212 Ravensburg (DE); Reuther, Oliver, 88368 Bergatreute (DE); Metzler, Marcus, 88339 Bad Waldsee (DE); Dorn, Günter, 88281 Schlier (DE)
(74) Vertreter: Müller Schupfner & Partner Patent- und Rechtsanwaltspartnerschaft mbB (Muc)

(57) **Zusammenfassung**

Die Erfindung betrifft Aufstelldach (2) für ein Freizeitfahrzeug, mit einem Dachelement (3), welches auf einem Dach (60) eines Freizeitfahrzeugs (1) angeordnet ist und aus einer unteren Fahrstellung in eine aufgestellte Wohn-/Schlafstellung überführbar ist, wobei in der aufgestellten Wohn-/Schlafstellung zwischen dem Dachelement (3) und dem Dach (60) des Freizeitfahrzeugs (1) ein Wohn-/Schlafraum (70) ausgebildet wird, welcher vom Innenraum des Freizeitfahrzeugs aus zugänglich ist, wobei der Wohn-/Schlafraum (70) in der aufgestellten Wohn-/Schlafstellung über mindestens 2/3 seiner Fläche zumindest eine Sitzhöhe (h) aufweist, wobei die Sitzhöhe (h) zumindest 75cm, vorzugsweise zumindest 80cm, stärker bevorzugt zumindest 85cm beträgt. Vorzugsweise weist eine Seitenwand (4) zumindest eine formstabile und/oder wärmeisolierende Schicht (20) auf.

## Beschreibung

Die Erfindung betrifft ein Aufstelldach für ein Freizeitfahrzeug sowie ein Freizeitfahrzeug mit einem Aufstelldach.

Eine Erweiterung des Wohnraums von Freizeitfahrzeugen mittels Aufstelldächern ist seit langem bekannt und wird bisher zur Schaffung von Schlafplätzen oder zur Generierung von Stehhöhe genutzt. Der überwiegende Teil der sich im Markt befindlichen Lösungen stellt das Dach so auf, dass es in Fahrtrichtung vorne höher ist. Daher muss der Zugang zum Schlafdach an der höheren Seite geplant werden, also vorne, direkt hinter dem Fahrersitz. Zum Heck hin fällt das Dach des Aufstelldaches hingegen stark ab. Um ausreichend Platz zum Schlafen zu haben und um am Dach nicht anzustoßen, sollte der Kopf zum Schlafen jedoch an der hohen Dachseite liegen. Daher muss ein Benutzer sich nach dem Einstieg nach oben umdrehen - was bei 2 Personen und gegebenenfalls schon einer schlafenden Person häufig kompliziert ist. Bei Freizeitfahrzeugen mit einem in Fahrtrichtung hinten höheren Dach gibt es die gleiche Problematik, da man dann am Fahrzeugheck (also am höheren Teil des Daches) einsteigt. Ferner sollte bei schrägem Untergrund darauf geachtet werden, dass das Fahrzeug so abgestellt ist, dass die Kopfseite erhöht ist. Daraus ergibt sich ein weiteres Problem, da gerade bei Kastenwägen oder Campingbussen mit Längsbetten im unteren Wohnbereich tendenziell mit dem Kopf zum Fahrzeugende geschlafen wird. Bei schrägem Untergrund gibt es daher keine Möglichkeit, das Fahrzeug für eine angenehme Schlafposition oben und unten abzustellen, da perfekt horizontal nicht möglich ist.

Die Erfindung hat sich daher die Aufgabe gestellt, die oben genannten Probleme von Aufstelldächern bei Freizeitfahrzeugen zu verringern, und insbesondere die Nutzungsmöglichkeiten von Aufstelldächern zu erweitern.

Diese Aufgabe löst die Erfindung durch ein Aufstelldach gemäß Anspruch 1 sowie durch ein Freizeitfahrzeug, welches mit einem entsprechenden Aufstelldach ausgestattet ist. Vorteilhafte Ausgestaltungen sind in den Unteransprüchen angegeben.

Die Erfindung stellt ein Aufstelldach für ein Freizeitfahrzeug bereit, welches ein Dachelement aufweist, welches auf einem Dach eines Freizeitfahrzeugs angeordnet oder anordenbar ist und aus einer unteren Fahrstellung in eine aufgestellte Wohn-/Schlafstellung überführbar ist, wobei in der aufgestellten Wohn-/Schlafstellung zwischen dem Dachelement und dem Dach des Freizeitfahrzeugs ein Wohn-/Schlafraum ausgebildet wird, welcher vom Innenraum des Freizeitfahrzeugs aus zugänglich ist. Das Aufstelldach weist ferner zumindest eine Seitenwand auf, welche den Wohn-/Schlafraum in der aufgestellten Wohn-/Schlafstellung nach außen abgrenzt.

Das erfindungsgemäße Aufstelldach zeichnet sich dadurch aus, dass der unter dem Dachelement des Aufstelldaches gebildete Wohn-/Schlafraum in der aufgestellten Wohn/Schlafstellung über mindestens 2/3 seiner Fläche zumindest eine Sitzhöhe aufweist, wobei die Sitzhöhe zumindest 75 cm, vorzugsweise zumindest 80 cm, stärker bevorzugt zumindest 85 cm beträgt. Dadurch unterscheidet sich das erfindungsgemäße Aufstelldach erheblich von den bisherigen Lösungen, bei denen das Aufstelldach in der aufgestellten Stellung nur auf einer Seite eine ausreichende Sitzhöhe aufweist, auf der anderen Seite - der Fußseite des Schlafplatzes - hingegen fast bis zum Boden des Wohn-/Schlafraum abfällt, bzw. bis auf eine Höhe von typischerweise unter 30 cm. Durch die erfindungsgemäße Mindesthöhe kann der Raum unter dem Aufstelldach nicht nur zum Schlafen, sondern als wirklicher Wohnraum genutzt werden. Dies ist insbesondere bei kompakten Freizeitfahrzeugen wie Kastenwägen, Campingbusse, Wohnwägen und größere Pkws interessant. Diese kompakten Freizeitfahrzeuge können auf normalen Pkw-Stellplätzen abgestellt werden und erlauben daher eine besonders vielseitige Nutzung, auch im Alltag. Allerdings bieten sie im Innenraum nur ein begrenztes Platzangebot, welches durch das erfindungsgemäße Aufstelldach erheblich erweitert wird. Beispielsweise kann der Wohn-/Schlafraum auf dem Dach des Freizeitfahrzeugs nun auch tagsüber als Spielfläche für Kinder oder Rückzugsort für Erwachsene genutzt werden. Darüber hinaus erlaubt ein insgesamt höheres Aufstelldach, den Zugang zum Innenraum des Freizeitfahrzeugs an beliebiger Stellung (vorne oder hinten) anzuordnen, woraus sich neue Grundrissoptionen ergeben. Die Erfindung ermöglicht somit neben einem deutlich gesteigerten Wohnwert neue Wohn-, und Grundrisskonzepte für Freizeitfahrzeuge. Das Aufstelldach der Erfindung wird bevorzugt nicht zur Erhöhung der Stehhöhe im Innenraum des Freizeitfahrzeugs verwendet. D.h., unter dem Aufstelldach wird ein weiteren Wohn-/Schlafraum mit einem eigenen Boden auf dem Dach und über dem (Haupt-)Innenraum des Freizeitfahrzeugs gebildet, und nicht nur der (Haupt-)Innenraum des Freizeitfahrzeugs nach oben erweitert.

Der Wohn-/Schlafraum weist in der aufgestellten Stellung des Dachelementes zumindest über 2/3 seiner Fläche eine Höhe auf, bei der man sitzen kann. Je nach Art des Sitzens (zurückgelehnt oder aufrecht) und Größe der Person ist hierfür zumindest 75 cm vorgesehen. Um auch größeren Personen ein aufrechtes Sitzen zu ermöglichen, beträgt die Sitzhöhe vorzugsweise zumindest 80 cm, stärker bevorzugt zumindest 85 cm. Vorzugsweise weist der Wohn-/Schlafraum in der aufgestellten Wohn-/Schlafraum über mindestens 80% , stärker bevorzugt über seine gesamte Fläche zumindest eine Sitzhöhe auf. Vorzugsweise erreicht der Wohn-/Schlafraum jedoch keine Stehhöhe. An der höchsten Stelle beträgt die Höhe des Wohn-/Schlafraum daher bevorzugt bis zu 160cm, stärker bevorzugt bis zu 140 cm, stärker bevorzugt bis zu 125cm. Die genannten Höhen beziehen sich jeweils auf die für den Benutzer zur Verfügung stehende Raumhöhe und bemessen sich insbesondere im Innenraum des Wohn-/Schlafraum von dessen Boden bis zur Unterseite des Dachelementes. Der Boden des Wohn-/Schlafraums wird z.B. durch eine sogenannte Unterschale des Aufstelldaches gebildet, welche z.B. auf das Dach des Freizeitfahrzeugs aufgesetzt ist.

Das Aufstelldach ist für jede Art von Freizeitfahrzeug geeignet, darunter sowohl Wohnwagen (Wohnanhänger) als auch Reisemobile sowie Kastenwägen und größere Pkws. Besonders geeignet ist das Aufstelldach für kompakte Freizeitfahrzeuge, insbesondere für Kastenwägen und Urban Vehicles. Bei Kastenwägen, auch Campervan genannt, wird ein Transporter zum Freizeitfahrzeug umgebaut, wobei die Außenwände erhalten werden. Unter einem Urban Vehicle versteht man einen größeren Pkw, der durch entsprechende Einbauelemente sowie ein Aufstelldach zum Freizeitfahrzeug umgebaut wird.

Das Aufstelldach weist ein Dachelement auf, welches auf dem Dach des Freizeitfahrzeugs angeordnet oder anordenbar ist. Typischerweise wird zur Bildung des Bodens des Wohn-/Schlafraum eine Unterschale auf das Dach des Fahrzeugs aufgesetzt, in welche eine Matratze eingelegt werden kann. Darauf wird das Dachelement angeordnet, welches aus einer unteren Fahrstellung in eine aufgestellte stellte Wohn-/Schlafstellung überführbar ist. Dies kann unter Verwendung eines weiter unten noch genauer beschriebenen Hubmechanismus geschehen. In der unteren Fahrstellung ist der Wohn-/Schlafraum also eingeklappt. Nach dem Abstellen des Fahrzeugs kann das Dachelement manuell oder automatisiert aufgestellt werden. Der Wohn-/Schlafraum ist mit zumindest einer Seitenwand ausgestattet, die sich in der unteren Fahrstellung zwischen Dachelement und dem Dach des Freizeitfahrzeugs befindet, z.B. in einer eingefalteten Stellung, und beim Aufstellen aufgefaltet wird, um die Seitenwand zu bilden, die den Wohn-/Schlafraum nach außen abgrenzt. Vorzugsweise ist der Wohn-/Schlafraum an allen 4 Seiten durch eine Seitenwand nach außen abgegrenzt, wobei die Seitenwand auch Fenster aufweisen kann, wie weiter unten näher erläutert. Vorteilhaft in der Wohn-/Schlafraum an den Innenraum des Freizeitfahrzeugs angeschlossen oder anschließbar. Dies kann beispielsweise durch einen Zugang geschehen. Der Zugang kann als eine Öffnung oder Einstiegsluke im Dach des Freizeitfahrzeugs ausgebildet sein. Durch die Öffnung kann ein Nutzer vom Innenraum des Freizeitfahrzeugs den Wohn-/Schlafraum erreichen, z.B. mittels einer Leiter. In einer anderen Ausführungsform kann der Zugang auch als eine Tür oder ein Fenster in einer Seitenwand realisiert sein, wobei dies ein zusätzlicher Zugang oder der einzige Zugang sein kann.

Gemäß einer bevorzugten Ausführungsform ist das Dachelement im aufgestellten Zustand in einer Fahrtrichtung des Freizeitfahrzeugs schräg gestellt und weist insbesondere einen Winkel von 5° bis 30°, vorzugsweise 8° bis 20°, zur Horizontalen auf. In besonderen Fällen kann es jedoch auch parallel zum Dach des Freizeitfahrzeugs sein, also insbesondere horizontal. Unter einer Fahrtrichtung des Freizeitfahrzeugs wird hier die Hauptfahrtrichtung verstanden, also die Richtung vom Heck zum Bug. Vorzugsweise ist das Dachelement also im aufgestellten Zustand derart schräg gestellt, dass es am Heck oder am Bug höher ist. Neben einem dynamischeren Aussehen hat dies den erheblichen Vorteil, dass Regenwasser oder Schnee besser abfließen oder abrutschen können. Wenn das Dach mit Solarelementen ausgestattet ist, besteht zudem die Möglichkeit, das Dach zur Sonne auszurichten, um einen besseren Solarertrag auch bei schrägstehender Sonne generieren zu können. Aufgrund der überall gegebenen Sitzhöhe ist die Schrägstellung des Dachelementes vorzugsweise nicht so stark wie bei bekannten Aufstelldächern, sondern bevorzugt weniger als 30°, beispielsweise etwa 10° zur Horizontalen. Es ist jedoch auch gut denkbar, dass das Dachelement im aufgestellten Zustand zumindest im Wesentlichen horizontal ist. Dies erlaubt eine besonders komfortable Nutzung als Wohnraum, da dann die gesamte Fläche mit einer Sitzhöhe ausgestattet ist und somit entsprechend genutzt werden kann. Ferner sind auch Ausführungsformen denkbar, bei welchen das Dachelement im aufgestellten Zustand in eine Richtung quer zur Fahrtrichtung schräg gestellt ist, bevorzugt mit den genannten Winkeln.

Gemäß einer bevorzugten Ausführungsform ist das Dachelement im aufgestellten Zustand in Fahrtrichtung hinten (also am Heck) höher. Dies hat den Vorteil, dass, insbesondere bei Campervans, der Wohnraum im Fahrzeug sowohl unten als auch oben eine Aussicht nach hinten erlaubt. Campervans weisen üblicherweise eine Hecktür auf, durch die das Heck komplett nach hinten geöffnet werden kann. Das Fahrzeug wird daher typischerweise so abgestellt, dass die beste Aussicht vom Heck aus zu sehen ist. Es ist vorteilhaft, wenn der Wohn-/Schlafraum oben also zur gleichen Seite ausgerichtet ist. Auf diese Weise wird der Wohn-/Schlafraum im Aufstelldach aufgewertet. Insbesondere ist es dazu vorteilhaft, wenn in einer Heck-Seitenwand des Wohn-/Schlafraum ein Sichtfenster angeordnet ist. Vorteilhaft ist auch der niedrigere Teil des Wohn-/Schlafraum in Fahrtrichtung nach vorne mindestens so hoch, dass man komfortabel ein-/aussteigen kann und in jedem Bereich des Wohn-/Schlafraum des Aufstelldaches mindestens aufrecht sitzen kann. So kann der Raum nicht nur zum Schlafen, sondern als echte Wohnraumerweiterung genutzt werden. Insbesondere kann der Zugang zum Wohn-/Schlafraum in Fahrtrichtung auf der Seite sein, an der das Dachelement im aufgestellten Zustand niedriger ist, wobei der Zugang in insbesondere als eine Öffnung oder Einstiegsluke im Dach ausgebildet ist. Vorzugsweise ist der Zugang zum Wohn-/Schlafraum bzw. die Einstiegsluke in Fahrtrichtung vorne.

Gemäß einer bevorzugten Ausführungsform weist die zumindest eine Seitenwand, bevorzugt alle Seitenwände des Wohn-/Schlafraums, zumindest eine formstabile und/oder wärmeisolierende Schicht auf. Dies hat den Hintergrund, dass der Wohn-/Schlafraum vorteilhaft isoliert sein sollte, um eine Nutzung als Wohnraum auch bei kühler Witterung, z.B. im Herbst und Winter, zu ermöglichen. Im Stand der Technik wird als Wandmaterial in der Regel ein Zeltstoff verwendet, der zwar wasserabweisend ist, jedoch keinerlei Isolationswirkung im Hinblick auf Temperatur oder Schall aufweist. Außerdem ist der Zeltstoff sehr dünn und wird daher nicht als Wand empfunden. Dies kann dazu führen, dass Personen mit Höhenangst sich unwohl fühlen und somit Schwierigkeiten haben, den Wohn-/Schlafraum als Wohnraum zu nutzen. Wenn die Wände hingegen eine gewisse Dicke und damit einhergehende Formstabilität aufweisen, erhöht dies das Sicherheitsempfinden. Andererseits soll die Seitenwand jedoch durch die formstabile Schicht nicht zu schwer werden, so dass die Schicht bevorzugt keine Kunststoffschicht, Metallschicht oder GFK-Schicht ist oder umfasst. Die Seitenwand umfasst bevorzugt auch keine Holz- oder Sandwichplatte. Sie soll vorzugsweise nicht komplett steif sein, sondern soll bevorzugt komprimierbar sein, damit in der unteren Fahrstellung noch im Aufstelldach Platz findet. Unter einer formstabilen und gleichzeitig wärmeisolierenden Schicht wird insbesondere eine Schicht aus einem geschäumten oder gefilzten Material verstanden, z.B. aus Schaumstoff oder auch aus Filz bzw. Filzplatten. Ein Filzmaterial kann bereits ein stabiles, gutes Wandgefühl liefern und kann gleichzeitig faltbar sein. Filz liefert sowohl eine gewisse Formstabilität, als auch eine Isolationswirkung gegen Wärme und Schall. Auch Schaumstoff kann in verschiedenen Härten verwendet werden und liefert sowohl Formstabilität als auch Wärme- und Schallisolation.

In einer bevorzugten Ausführungsform weist die Seitenwand zumindest eine Schicht aus einem selbstexpandierenden Material auf. Diese Schicht ist bevorzugt gleichzeitig die formstabile und/oder wärmeisolierende Schicht. Dies hat den Vorteil, dass die Schicht und somit die Seitenwände in der unteren Fahrstellung des Dachelementes wenig Platz einnehmen. Beim Aufstellen des Aufstelldaches bekommt das selbstexpandierende Material den Freiraum, um nun zu expandieren, ohne externen Antrieb. Durch die selbstexpandierende Beschaffenheit des Materials bilden sich dabei Wände mit einer vorher definierten Wandstärke, ohne Hilfsmittel wie das Einblasen von Luft. Durch die Verformbarkeit und Elastizität dieser Materialien kehren die Wandstrukturen beim Aufstellen des Dachelementes in ihre ursprüngliche Form zurück. Beim Schließvorgang, also beim Überführen des Dachelementes in die untere Fahrstellung, wird das selbstexpandierende Material komprimiert. Vorzugsweise ist die Schicht aus selbstexpandierendem Material so konzipiert, dass sie sich von selbst zu einer bestimmten Struktur oder Form faltet. Dies kann beispielsweise durch präzise gestaltete Scharniere, Falzlinien, oder Materialverdünnungen erreicht werden.

Das selbstexpandierende Material kann beispielsweise ein schwammartiges Material sein, oder ein Schaumstoffmaterial, vorzugsweise offenporig. Es kann auch aus einem Polymer-System hergestellt sein. Manche Polymermaterialien reagieren auf Reize wie Freiraum oder Temperatur. Diese Materialien können sich unter dem Einfluss dieser Reize ausdehnen oder kontrahieren.

In einer anderen Ausführungsform ist die zumindest eine Seitenwand als Stoffbalg z.B. aus Zeltstoff ausgebildet. In einer weiteren Ausführungsform weist die zumindest eine Seitenwand luftgefüllte Hohlkammern auf. Diese können beispielsweise mit einem Kompressor oder einer Pumpe aufgepumpt werden, insbesondere beim Aufstellen des Aufstelldachs. Auch bei dieser Ausführungsform kann das Dachelement im aufgestellten Zustand in Fahrtrichtung hinten (also am Heck) höher sein.

Die formstabile und/oder wärmeisolierende Schicht muss sich nicht über die gesamte Seitenwand erstrecken, sie kann auch lediglich bereichsweise vorgesehen sein, wobei sich die formstabile und/oder wärmeisolierende Schicht vorzugsweise über einen Großteil der zumindest ein Seitenwand erstreckt, beispielsweise über mehr als 80 %, vorzugsweise mehr als 90 ,% besonders bevorzugt über die kompletten Seitenwände. Gemäß einer bevorzugten Ausführungsform weist das Aufstelldach 4 Seitenwände auf, also jeweils eine auf den in Fahrtrichtung vorne und hinten gelegenen Seiten, und zwei an den beiden Seiten. In einer bevorzugten Ausführungsform sind die Seitenwände an den 4 Ecken weicher ausgebildet, oder die formstabile Schicht ist hier dünner oder nicht vorhanden, um ein Einfalten oder Einklappen der Seitenwände in der unteren Fahrstellung zu ermöglichen. Vorteilhaft weist die formstabile und/oder wärmeisolierende Schicht zu diesem Zweck vordefinierte Falz- oder Knicklinien auf, welches beispielsweise als Materialverdünnungen oder Einschnitte ausgeführt sein können. Vorzugsweise sind diese derart geometrisch angeordnet, beispielsweise umlaufend etwa auf halber Höhe der Seitenwand, dass sich die Seitenwände beim Einklappen des Dachelementes automatisch nach innen falten. Der in der unteren Fahrstellung unter dem Dachelement verbleibende Raumes ist vorzugsweise so groß, dass zumindest die eingefalteten oder eingeklappten Seitenwände darin Platz finden. Vorteilhaft ist auch noch Platz für das zum Schlafen notwendige Bettzeug, also beispielsweise bis zu 2 Kissen und 2 Bettdecken.

Die wärmeisolierende und/oder formstabile Schicht ist vorzugsweise nicht abnehmbar befestigt und somit fester Bestandteil der Seitenwand, d.h. sie ist auch in der eingeklappten unteren Fahrstellung im Aufstelldach vorhanden und wird direkt durch das Aufstellen des Aufstelldachs zusammen mit der Seitenwand ausgeklappt und aufgestellt. Dies steht im Gegensatz zu bekannten Nachrüstmöglichkeiten, bei welcher an einen Stoffbalg eines Aufstelldaches von innen manuell eine isolierende Schicht durch den Benutzer befestigt wird. Gemäß einer Ausführungsform ist die wärmeisolierende und/oder formstabile Schicht die alleinige Schicht der Seitenwand, oder sie ist mit einer insbesondere wasserabweisenden Außenschicht unlösbar verbunden.

Gemäß einer bevorzugten Ausführungsform ist die zumindest eine Seitenwand nach außen wasserabweisend. Filzmaterial kann beispielsweise imprägniert werden und somit die wasserabweisend Funktion bereitstellen. In diesem Fall - also wenn die wärmeisolierende Schicht imprägnierbar ist - kann die zumindest eine Seitenwand nur die Schicht aus formstabilen und/oder wärmeisolierenden Material aufweisen. In einer anderen Ausführungsform ist die zumindest eine Seitenwand des Aufstelldaches mehrschichtig aufgebaut. Insbesondere weist sie eine äußere wasserabweisende oder wasserdichte Schicht auf, gefolgt optional von einem Moskitonetz, welches möglicherweise lediglich in Fensterbereichen oder Luft- oder Lichtöffnungen vorhanden ist. Die wasserabweisende/wasserdichte Schicht kann beispielsweise aus einem Zeltstoff gefertigt sein. Vorzugsweise ist die wasserabweisende Schicht atmungsaktiv. Beispielsweise kann sie als eine atmungsaktive Membrane ausgeführt werden, welche Luft hindurch lässt, jedoch von außen kein Wasser einlässt. Ferner weist die mehrschichtige zumindest eine Seitenwand bevorzugt eine formstabile und/oder eine wärmeisolierende Schicht auf. Vorzugsweise schließt sich diese zur Innenseite hin an die äußere Schicht an und bildet Insbesondere eine innere Schicht. Zumindest bereichsweise kann die formstabile und/oder eine wärmeisolierende Schicht auf die äußere wasserabweisende Schicht aufgebracht sein, z.B. geschweißt oder geklebt.

Die formstabile bzw. selbstexpandierende Schicht weist beispielsweise eine Shore Härte von zwischen 10 Shore-00 und 70 Shore-A, stärker bevorzugt zwischen 5 Shore-A und 40 Shore-A auf. Zudem weist das Material der Schicht beispielsweise eine Dichte von zwischen 10 und 80 auf. So kann die selbstexpandierende Schicht z.B. in einem Bereich von HR1010 und HR8070 liegen. Die formstabile/ selbstexpandierende Schicht kann also in verschiedenen Ausprägungen vorhanden sein. In einigen Ausführungsformen ist sie eher hart wie eine Wand, in anderen Ausführungsformen weich und stauchbar. Vorzugsweise gibt die formstabile Schicht leicht nach, wenn sich ein Benutzer an sie anlehnt oder sich gegen sie abstützt, aber bietet trotzdem stärker die Anmutung einer Wand als reiner Zeltstoff. In bevorzugten Ausführungsformen kann die Seitenwand mit der formstabilen Schicht als Rückenlehne beim Sitzen fungieren.

Die formstabile Schicht besteht beispielsweise aus einem Schaumstoff mit der genannten Härte und beispielsweise eine Dicke zwischen 5 und 70 mm, stärker bevorzugt zwischen 10 und 40mm. Der Schaumstoff kann aus PET, recyceltem PET oder auch aus anderen recycelten Materialien gefertigt sein. In einer Ausführungsform ist der Schaumstoff selbstexpandierend und fungiert wie eine selbstaufblasende Isomatte.

In einer anderen Ausführungsform kann die formstabile Schicht eine formstabile Filzschicht sein, beispielsweise mit einer Dicke zwischen 5 und 30 mm. Eine derartige Filzschicht kann nach außen wasserabweisend sein, z.B. imprägniert. Filz ist stabil, bietet ein gutes Wandgefühl und ist faltbar. Darüber hinaus kann Filz aus nachhaltigen Materialien hergestellt werden.

Die zumindest eine Seitenwand kann auch aus einem Materialmix hergestellt sein, um zum Beispiel eine härtere Wandfläche und weichere und somit flexiblere Ecken zu erreichen. Die formstabile Schicht ist vorzugsweise gleichzeitig isolierend. Es ist jedoch auch möglich, diese Funktionen zu trennen, z.B. indem eine dünne formstabile Schicht, z.B. aus einem dünnen Kunststoff, faserverstärkte Kunststoff oder einer dünnen Matte z.B. aus Filz oder Naturfasern, mit einer wärmeisolierende Schicht kombiniert wird, wobei die wärmeisolierende Schicht, insbesondere auf der Innenseite der formstabilen Schicht aufgebracht wird. Die wärmeisolierende Schicht kann hier z.B. ein weicher Schaumstoff sein. Diese Ausführungsform hat den Vorteil, dass die formstabile Schicht in den Eckbereichen und den Falzlinien unterbrochen sein kann.

Die wärmeisolierende Schicht - welche mit der formstabilen Schicht eine Einheit bilden kann - kann beispielsweise einen Wärmedurchgangswert (Q-Wert) von beispielsweise 0,3 bis 2 W/m ² K, vorzugsweise 0,5-1W/m ² K aufweisen. Vorzugsweise haben alle Materialien der Seitenwände die Eigenschaft, aufgenommene Feuchtigkeit auch wieder abgeben zu können, um einer möglichen Schimmelbildung vorzubeugen.

Zwischen äußerer wasserabweisender Schicht und formstabiler bzw. wärmeisolierender Schicht kann gegebenenfalls ein Moskitonetz vorgesehen sein, insbesondere in einem Fensterbereich der Seitenwand. An einer solchen Lichtöffnung ist vorzugsweise die äußere wasserabweisende Schicht durchsichtig und ist zum Beispiel als Fensterfolie z.B. aus Kunststoffschicht ausgebildet. Dann folgen das Moskitonetz und innen das wärmeisolierende Material. Bevorzugt können die verschiedenen Schichten einzeln geöffnet werden, die äußere wasserabweisende Schicht und das Moskitonetz insbesondere durch Reißverschlüsse. Die formstabile bzw. wärmeisolierende Schicht kann vorzugsweise nach innen geklappt oder aufgerollt werden, beispielsweise über im Material vorhanden Knicklinien wie Materialverdünnungen, Einschnitte oder Filmscharniere. Sind die Knicklinien senkrecht an den Seiten des Fensters angeordnet, kann die innenliegende formstabile und/oder wärmeisolierende Schicht vorzugsweise wie ein Fensterladen nach innen geklappt werden. Dort kann sie z.B. durch Klettverschlüsse befestigt werden. In einer anderen Ausführungsform wird die formstabile bzw. wärmeisolierende Schicht nach oben geklappt, über eine Knicklinie in der Nähe des Dachelementes, wobei dann die formstabile und/oder wärmeisolierende Schicht oben z.B. durch Klettverschlüsse am Dachelement befestigt werden kann. Alternativ kann die formstabile Schicht im Fensterbereich auch verschiebbar ausgebildet sein, um den Lichteinlass im Fensterbereich zu öffnen. In einem nächsten Schritt kann der Nutzer dann das Moskitonetz und das äußere Fenstermaterial (Fensterfolie) einzeln öffnen. Dadurch kann der Nutzer individuell entscheiden, welches Material im Fensterbereich vorhanden sein soll, oder ob alles offen sein soll.

Gemäß einer bevorzugten Ausführungsform ist an der Innenseite des zumindest einen Wandelements eine Ablage integriert, insbesondere ein Netz, eine Tasche und/oder ein ausklappbares Regalbrett. Derartige Stauraummöglichkeiten erhöhen den Nutzwert des im Aufstelldach geschaffenen Raums als Wohnraum.

Gemäß einer bevorzugten Ausführungsform weist die zumindest eine Seitenwand eine Zwangsbelüftungsöffnung auf. Diese ist vorzugsweise angrenzend oder in einem Abstand von weniger als 10 cm vom Dachelement, insbesondere weniger als 10cm unterhalb des Dachelements, angeordnet. Die Zwangsbelüftungsöffnung, von der auch mehrere vorhanden sein können, erlaubt eine Luftzirkulation von unten nach oben, also von einem Innenraum des Freizeitfahrzeugs in den Wohn-/Schlafraum des Aufstelldaches. Durch diesen Kamineffekt kann die Heizungswärme von unten auch den oberen Raum heizen. Dadurch kann der Wohn-/Schlafraum im Aufstelldach auch in der kühleren Jahreszeit genutzt werden. Die zumindest eine Zwangsbelüftungsöffnung ist vorzugsweise als ein oder mehrere Lüftungsschlitze ausgebildet. Vorzugsweise ist die zumindest eine Zwangsbelüftungsöffnung auch verschließbar, falls ein Nutzer sich durch die leichte Luftzirkulation gestört fühlt. Gleichzeitig ist aber vorzugsweise eine ausreichende Belüftung, entweder durch den atmungsaktiven Materialmix oder andere technische / mechanische Lösungen, wie Dachhauben, gewährleistet. Beispielsweise kann eine Zwangsbelüftungsöffnung als ein Lüftungsgitter bzw. eine Reihe von Schlitzen ausgebildet sein, welche durch seitliches Verschieben eines komplementären Lüftungsgitter geöffnet und geschlossen werden kann. Ein solches Lüftungsgitter kann mit dünnen Kunststoffblättern realisiert werden. Die zumindest eine Zwangsbelüftungsöffnung kann auch isoliert sein. Um ein angenehmes Raumklima zu erzeugen, ist die zumindest eine Zwangsbelüftungsöffnung vorzugsweise angrenzend oder in einem Abstand von weniger als 10 cm unterhalb des Dachelement angeordnet. Die Abstandsangabe bezieht sich auf die Oberkante der zumindest eine Zwangsbelüftungsöffnung. Auf diese Weise kann warme Luft von unten den Wohn-/Schlafraum bis unter die Decke erwärmen. Außerdem ist die Zwangsbelüftungsöffnung dadurch durch das Dachelement vor Witterung geschützt ist, so dass insbesondere kein Regen eindringen kann. Vorzugsweise ist die zumindest eine Zwangsbelüftungsöffnung an der höchsten Seitenwand des Wohn-/Schlafraum angeordnet. Alternativ kann sie an einer oder beiden der seitlichen Seitenwände angeordnet sein.

Alternativ oder zusätzlich ist die zumindest eine Seitenwand vorzugsweise zumindest bereichsweise atmungsaktiv. Wenn die Seitenwände atmungsaktiv sind oder ausreichend atmungsaktive Bereiche aufweisen, ist eine Zwangsbelüftungsöffnung möglicherweise nicht notwendig. Die Atmungsaktivität kann auch zusätzlich vorgesehen werden, um ein angenehmes Raumklima im Wohn-/Schlafraum zu gewährleisten. Vorzugsweise ist die formstabile und/oder wärmeisolierende Schicht atmungsaktiv. Hierfür geeignete Materialien sind beispielsweise Filzmaterialien und offenporige Schaumstoffe. Auch die verwendeten Zeltstoffe sind typischerweise atmungsaktiv.

Gemäß einer alternativen Ausführungsform ist der Wohn-/Schlafraum unabhängig vom Innenraum des Freizeitfahrzeugs beheizbar. Dies kann beispielsweise durch eine Verlegung von einer Luftheizung oder Warmwasserheizung oder durch ein elektrisches Heizsystem erreicht werden. Insbesondere lässt sich der Wohn-/Schlafraum durch eine Heizungsverlegung beheizen.

Gemäß einer bevorzugten Ausführungsform weist die zumindest eine Seitenwand zumindest eine formstabile Schicht auf, wobei in einem Fensterbereich zumindest die formstabile Schicht der Seitenwand nach innen und oder außen klappbar ist. Bei im Wesentlichen senkrechten Achsen kann das Fenster wie ein Fensterladen geöffnet werden. Vorzugsweise öffnen sich die klappbaren Elemente der Seitenwand nach innen, sodass der Fensterbereich durch eine Fensterfolie verschlossen bleiben kann. Vorzugsweise ist auch diese durch Klettverschlüsse oder Reißverschlüsse öffenbar, wobei die Fensterfolie beispielsweise nach außen geklappt oder aufgerollt wird. Besonders bevorzugt ist das klappen der formstabilen Schicht um eine im Wesentlichen horizontale Achse insbesondere über dem Fensterbereich, da auf diese Weise beim Klappen nach außen ein Vordach realisiert werden kann. In diesem Fall wird die die äußere Schicht soweit vorhanden mit aufgeklappt. Das aufgeklappte Wandelement kann durch Stangen hochgehalten werden, oder alternativ durch am Dachelement befestigte Gurt-, oder Seilelemente. Auf diese Weise ist es möglich, den Wohn-/Schlafraum noch um einen Raum vor dem Fensterbereich zu erweitern, der dann durch ein Vordach vor Sonne und Regen geschützt ist.

Gemäß einer bevorzugten Ausführungsform weist das Aufstelldach in einer Seitenwand, insbesondere der Seitenwand mit der größten Höhe, ein Panoramafenster auf, welche sich zumindest über einen Großteil der Breite der betreffenden Seitenwand erstreckt. Dies entspricht vorzugsweise etwa der Breite des Fahrzeugs. Unter einem Großteil der Breite wird insbesondere mehr als 80 %, vorzugsweise mehr als 90 %, besonders bevorzugt die gesamte Breite der Seitenwand verstanden. Vorzugsweise handelt es sich um die Seitenwand mit der größten Höhe, welche bevorzugt in Fahrtrichtung nach hinten ausgerichtet ist. Das Panoramafenster ist vorzugsweise auch bodentief. Es kann sich optional auch bis ganz nach oben zum Dachelement erstrecken, kann aber auch einen Abstand von z.B. 10cm bis 40cm halten. Das Panoramafenster kann wie der oben beschriebene Fensterbereich ausgestaltet sein. Besonders bevorzugt ist im Bereich des Panoramafensters zumindest die formstabile Schicht der Seitenwand nach außen klappbar, insbesondere um eine über dem Fenster gelegene horizontale Achse. Durch das Öffnen des Panoramafensters und das Hochklappen des Wandelements entsteht ein Panoramadach. In einigen Ausführungsformen kann das Panoramafenster auch den Ausgang zu einer noch dahinterliegenden Dachterrasse auf dem Fahrzeugdach bilden, bei entsprechender Fahrzeuglänge. Alternativ kann das Panoramafenster auch in einer Seitenwand aus Zeltmaterial ausgebildet sein. Auch in diesem Fall kann vorzugsweise das gesamte Panoramafenster geöffnet werden, beispielsweise durch Aufrollen des Materials oder durch Ausstellen nach außen. Besonders bevorzugt ist das Panoramafenster jedoch durch ein nach oben und/oder unten klappbares formstabiles Wandelement verschließbar, wobei das Wandelement in der nach oben geklappten Stellung ein Vordach des Wohn-/Schlafbereichs bildet. Durch ein optisches Öffnen des Wohn-/Schlafraum mittels des Panoramafenster nach hinten wird im hinteren Bereich des Fahrzeugs ein attraktiver Wohnbereich geschaffen.

In einer vorteilhaften Ausführungsform erstreckt sich das Panoramafenster über die gesamte Breite einer in Fahrtrichtung vorne oder hinten liegenden Seitenwand, wobei in den angrenzenden Bereichen der in Fahrtrichtung seitlich liegenden Seitenwände ebenfalls Fenster angeordnet sind. Diese Fenster können ebenfalls wie die hierein beschriebene Fensterbereiche ausgebildet sein. In dieser Ausführungsform wird der Wohn-/Schlafbereichs nochmals aufgewertet, da der gesamte vordere oder hintere Bereich des Wohn-/Schlafbereichs wie ein Erker ein großes Panoramafenster aufweist. In einer Ausführungsform ist auch in den Ecken des Wohn-/Schlafbereichs keine Stütze mehr vorhanden, sodass das Panoramafenster eine 180°-Aussicht in einer Visieroptik ermöglicht. In einer anderen Ausführungsform sind in den Ecken stabilisierende Elemente vorgesehen, beispielsweise aufblasbare Säulen. Diese können zum Beispiel aus Drop-Stitch Material oder aus festem Luftbalgmaterial gefertigt sein.

Gemäß einer Ausführungsform ist das Dachelement durch einen Aktor, insbesondere einen Spindelantrieb oder einen hydraulischen oder pneumatischen Zylinder, aus der unteren Fahrstellung in die aufgestellte Wohn-/Schlafstellung überführbar, wobei der Aktor im aufgestellten Zustand in einem Abstand von weniger als 10 cm unterhalb des Dachelementes angeordnet ist. Derartige Aktoren zur Betätigung von Aufstelldächern sind bekannt. Allerdings sind sie im Stand der Technik stets unten auf dem Fahrzeugdach angeordnet. Werden diese jedoch direkt unterhalb der Dachschale angebracht, sind sie deutlich besser vor Witterungseinflüssen geschützt. Somit ist es möglich, auch bei einem besonders hoch aufstellbaren Aufstelldach einen sicheren mechanisch-automatisierten Hubmechanismus vorzusehen. Vorzugsweise ist auf jeder Fahrzeugseite ein Hubmechanismus vorhanden, durch den das Dachelement aus der Fahrstellung in die aufgestellte Wohn-/Schlafstellung überführbar ist. Dies kann entweder mechanisch-automatisch vonstattengehen, also mithilfe eines Aktors. Alternativ kann das Aufstelldach auch per Hand aufgestellt werden, wobei vorzugsweise Gasdruckfedern zum Einsatz kommen, um das Aufstellen zu erleichtern und das Dachelement in der aufgestellten Wohn-Schlafstellung zu halten. Vorzugsweise ist auf jeder Seite genau ein Hubmechanismus vorgesehen, z.B. ein Scherenelement.

Die Erfindung ist auch auf ein Freizeitfahrzeug mit einem erfindungsgemäßen Aufstelldach gerichtet. Bevorzugt ist das Freizeitfahrzeug ein Kastenwagen, auch Campervan genannt, oder ein größerer Pkw wie beispielsweise ein Caddy oder Urban Vehicle oder Wohnwagen.

Gemäß einer bevorzugten Ausführungsform ist in Fahrtrichtung vor oder hinter dem Wohn-/Schlafraum des Aufstelldaches - insbesondere vor der Seitenwand mit der größten Höhe - auf dem Dach des Freizeitfahrzeugs eine Dachterrasse vorhanden, welche vom Wohn-/Schlafraum aus zugänglich ist. Dadurch kann der Wohn-/Schlafraum noch flexibler genutzt werden und erlaubt die Bildung einer kompletten 2. Etage auf dem Freizeitfahrzeug. Insbesondere in Kombination mit dem Panoramadach ergibt sich hierdurch ein völlig neues Wohngefühl.

Durch die Erfindung wird das Aufstelldach komplett neu interpretiert. War es bisher nur zum Schlafen oder zur Generierung von Stehhöhe gedacht, wird aus ihm nun ein kompletter und gut nutzbarer Wohnraum. Durch die Kombination mit wärmeisolierenden Seitenwänden ergeben sich jahreszeitlich dauerhafte Nutzungsmöglichkeiten. Ferner lassen sich neue Grundrissgestaltungen erreichen, vor allem bei Campervans und Campingbussen, bei denen der Hauptnutzungsbereich in den hinteren Bereich verlegt werden kann. Der Nutzungszeitraum wird deutlich verlängert und kann bis in den Winter reichen. Durch ein nach hinten höher aufgestelltes Dach, welches sich manuell oder automatisch öffnen und schließen lässt, mit einer Mindesthöhe im Wohn-/Schlafraum über zumindest 2/3 der Fläche, bei dem man bequem aufrecht sitzen kann, durch clevere Belüftung und Heizoptionen sowie neuartige Materialien, wird der bisher auf dem Dach nur als Schlafplatz oder Stehhöhenerweiterung genutzte Platz als wirklicher Wohnraum genutzt.

Die Erfindung wird nun anhand von Ausführungsbeispielen mit Bezug auf die beiliegenden Zeichnungen näher erläutert. Gleiche oder einander entsprechende Teile sind in den Zeichnungen mit den gleichen Bezugszeichen gekennzeichnet.

In den Zeichnungen zeigen:
- Figur 1: Eine schematische Seitenansicht eines Campervans mit einem Aufstelldach gemäß einer Ausführungsform der Erfindung;
- Figur 2: Eine schematische Seitenansicht eines Campervans mit einem Aufstelldach gemäß einer Ausführungsform der Erfindung;
- Figur 3: Eine schematische Seitenansicht eines Campervans mit einem Aufstelldach gemäß einer weiteren Ausführungsform der Erfindung;
- Figur 4: Einen schematischen horizontalen Querschnitt durch ein Wohn-/Schlafraum mit Seitenwänden;
- Figur 5: Eine perspektivische Ansicht eines Aufstelldachs gemäß einer Ausführungsform der Erfindung;
- Figur 6: Eine schematische perspektivische Ansicht eines Aufstelldachs gemäß einer Ausführungsform der Erfindung;
- Figur 7: Eine Hubmechanismus eines Aufstelldachs gemäß einer Ausführungsform der Erfindung;

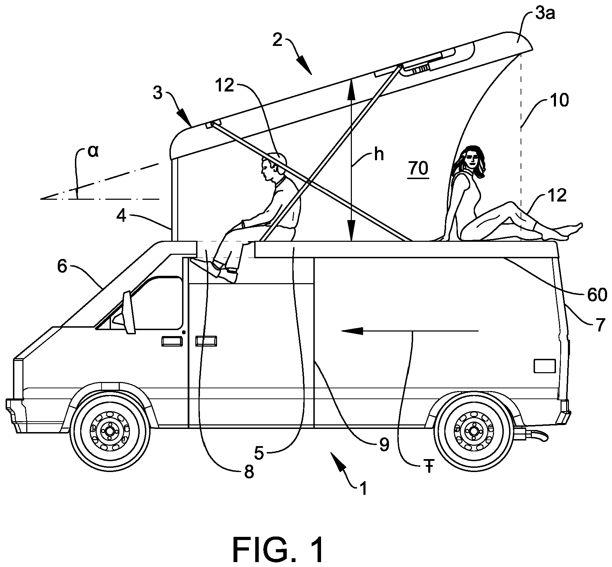

Figur 1 zeigt ein Freizeitfahrzeug 1, hier einen Campervan. Die Fahrtrichtung ist durch den Pfeil F gekennzeichnet. In Fahrtrichtung vorne ist Bug und Fahrerhaus 6, in Fahrtrichtung hinten das Heck 7 des Campervans. Mit 9 ist die Schiebetür 9 des Campervans gekennzeichnet. Der Campervan weist ein Aufstelldach 2 gemäß einer Ausführungsform der Erfindung auf. Das Aufstelldach 2 ist auf das Fahrzeugdach 60 des Campervans 1 aufgesetzt. Es weist ein Dachelement 3 auf, welches in der aufgestellten Wohn-/Schlafstellung dargestellt ist. Das Dachelement ist in Fahrtrichtung F des Freizeitfahrzeugs schräg gestellt, und zwar um einen Winkel α von etwa 10°. Im dargestellten, bevorzugten Beispiel ist das Dachelement in Fahrtrichtung hinten höher.

Der unter dem Dachelement 3 gebildete Wohn-/Schlafraum 70 wird nach unten durch die Unterschale 5 des Aufstelldachs begrenzt, welches auf das Dach 60 des Kastenwagens 1 aufgesetzt ist. Eine zum Bug 6 gelegene Seitenwand ist mit 4 bezeichnet. Auch zu den Seiten (parallel zur Fahrtrichtung) sind Seitenwände vorhanden, die jedoch nicht dargestellt sind. Im vorderen Bereich des Fahrzeugdachs 60 ist eine Einstiegsluke 8 vorgesehen, welche einen Zugang vom Innenraum des Freizeitfahrzeugs 1 in den Wohn-/Schlafraum 70 im Aufstelldach 2 ermöglicht. Der Wohn-/Schlafraum 70 weist über zumindest zwei Drittel seiner Fläche zumindest Sitzhöhe auf, wie durch die sitzenden Personen 12 illustriert. Dies hat den Vorteil, dass die Einstiegsluke 8 vorne im Fahrzeug angeordnet sein kann, wie in Figur 1 dargestellt, und trotzdem kann der Wohn-/Schlafraum 70 auch im hinteren Bereich zum Sitzen genutzt werden. Um diese Nutzungsmöglichkeit noch zu verbessern, weist das Aufstelldach an seiner zum Heck 7 hin ausgerichteten Seite ein Panoramafenster 10 auf. Das Panoramafenster 10 erstreckt sich über die gesamte Breite der hinteren Seitenwand des Aufstelldaches, und im gezeigten Beispiel zusätzlich über angrenzende Bereiche der in Fahrtrichtung links und rechts liegenden Seitenwände, sodass der gesamte Heckbereich des Wohn-/Schlafraums 70 geöffnet werden kann, um für dort sitzende Personen 12 einen Loggia-artigen zusätzlichen Wohnbereich bereit zu stellen.

Typischerweise weisen Campervans am Heck 7 eine große Hecktür auf, welche die Nutzung des hinteren Bereichs des Innenraums des Campervans als Wohnraum, z.B. mit einer Sitzgruppe, interessant macht. Korrespondierend hierzu kann durch die Erfindung auch der obere Wohn-/Schlafraum so nach hinten ausgerichtet werden, dass auch oben durch das Panoramafenster 10 ein Ausblick nach hinten genutzt werden kann.

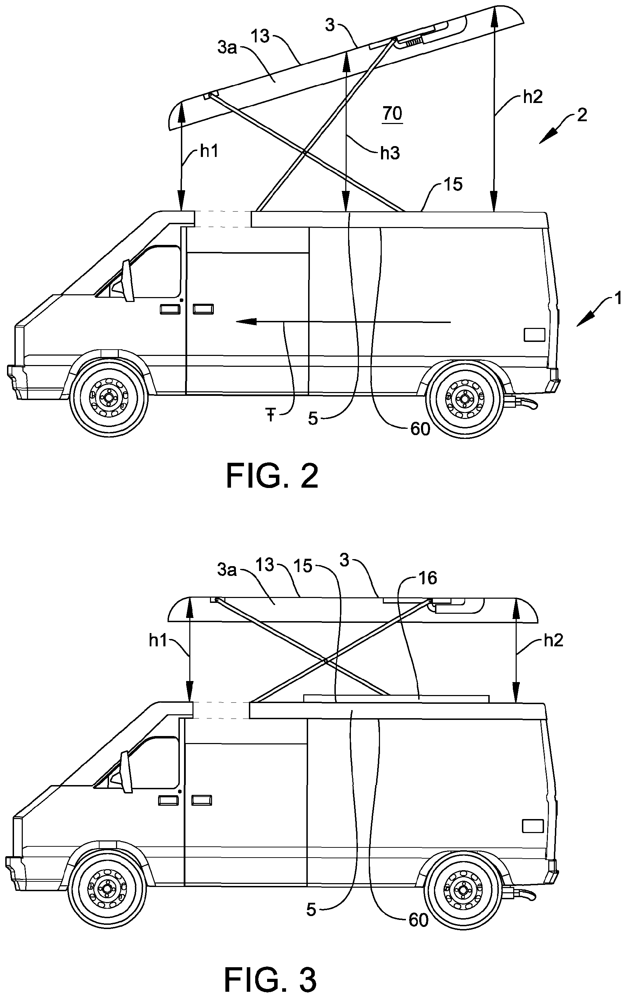

Figur 2 illustriert nochmals die Höhe h des Wohn-/Schlafraums 70, der unter dem Dachelement 3 gebildet wird. Die anspruchsgemäße Sitzhöhe wird im Innenraum des Wohn-/Schlafraums gemessen, und zwar von der Unterseite 13 des als Dachschale ausgebildeten Dachelements 3 bis zur Oberseite 15 der Unterschale 5 des Aufstelldachs. Zu den Seiten hin weist das Dachelement 3 einen Schalenrand 3a auf, der die Dachschale 3 umrandet und eine innere Verkleidung der Dachschale 3 sowie die dahinter verankerte Seitenwände 4 vor der Witterung schützt. Die Unterseite 13 der Dachschale ist also die Ebene, die den Wohn-/Schlafraum nach oben begrenzt.

Die Höhe des Wohn-/Schlafraums 70 beträgt über mindestens zwei Drittel seiner Fläche zumindest eine Sitzhöhe von zumindest 75 cm. Dies ist die Höhe, die eine Person minimal zum Sitzen benötigt. Zum aufrechten Sitzen werden bevorzugt zumindest 80 cm, stärker bevorzugt zumindest 85cm, noch besser zumindest 90cm benötigt. Die Höhe h1 kann also noch darunter liegen, z.B. bei 40 bis 70 cm. Die Höhe h2 an der höchsten Seitenwand, in diesem Fall der Seitenwand, die zum Heck ausgerichtet ist, beträgt hingegen vorzugsweise zwischen 90 cm und 150 cm. Bei h3 ist die Höhe dargestellt, die der genannten Sitzhöhe entsprechen muss, denn links davon liegt etwa ein Drittel der Fläche des Wohn-/Schlafraums liegt, und rechts davon, d.h. in Fahrtrichtung hinten, zwei Drittel der Fläche. Figur 2 zeigt eine Ausführungsform, bei welcher das Dachelement 3 zum Heck 7 hin höher ist, selbstverständlich sind auch Ausführungsformen denkbar, bei denen das Dachelement 3 nach vorne höher ist.

Figur 3 zeigt eine alternative Ausführungsform, bei welcher das Dachelement 3 im aufgestellten Zustand etwa waagerecht ist. In diesem Fall ist die Höhe h1 zumindest ungefähr gleich der Höhe h2 und beträgt zumindest Sitzhöhe. In Figur 3 ist außerdem eine Matratze 16 zu sehen, welche auf die Unterschale 5 des Aufstelldaches aufgesetzt ist.

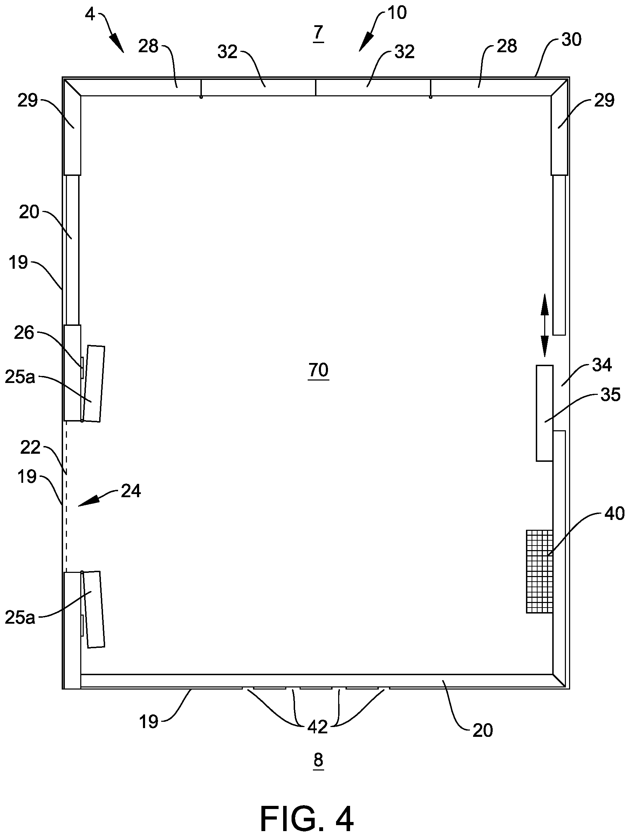

Figur 4 zeigt einen schematischen horizontalen Querschnitt durch einen Wohn-/Schlafraum, um beispielhaft verschiedene Merkmale der Seitenwände und Arten von Fensterbereiche in den Seitenwänden 4 zu illustrieren. Der Wohn-/Schlafraum ist auf allen vier Seiten von je einer Seitenwand 4 umgeben, welche zumindest bereichsweise eine formstabile und/oder wärmeisolierende Schicht aufweist und vorzugweise einen mehrschichtigen Aufbau aufweist. Außen ist die Seitenwand 4 witterungsbeständig, was entweder durch eine wasserabweisende Schicht 19, z.B. aus Zeltstoff oder Fensterfolie, oder eine Imprägnierung 30 der Seitenwand gewährleistet sein kann. Im Übrigen weisen die Seitenwände eine wärmeisolierende Schicht 20, 28, 29, 35 auf. Diese ist beispielsweise zwischen 5 und 30mm dick und hat auch eine gewisse Formstabilität. Sie ist bevorzugt nicht dazu ausgerichtet, das Dachelement konstruktiv zu tragen, bietet aber eine gewisse Anmutung der Stabilität sowie einen vergrößerten Rausfallschutz für den Benutzer. Außerdem hat sie wärme- und schallisolierende Eigenschaften, was den Wohn-/Schlafraum 70 aufwertet. Nach innen kann die wärmeisolierende Schicht nochmals mit einer weiteren Textilschicht verkleidet sein.

Bei 24 befindet sich ein Fensterbereich. In diesem Fensterbereich kann die wärmeisolierende Schicht 20 der Seitenwand 4 nach innen geklappt werden, um eine Lichtöffnung freizulegen. In dieser Öffnung ist vorzugsweise außen noch eine durchsichtige, wasserabweisende Schicht 19 z.B. aus Kunststofffolie oder Zeltstofffolie (auch "Fensterfolie" genannt) vorhanden. Dahinter kann ein Moskitonetz 22 vorhanden sein. Sowohl Moskitonetz 22 als auch die Fensterfolie 19 können vorzugsweise mittels eines Reißverschlusses geöffnet werden. Die aufklappbaren Elemente 25a der wärmeisolierenden Schicht werden in diesem Fall entlang zweier vertikaler Achsen geklappt, nach Art eines Fensterladens. Es ist vorteilhaft, wenn sie nach innen geklappt werden. Dort können sie an der Innenseite der Seitenwand 4 mittels einem Klettverschluss 26 oder einem Reißverschluss befestigt werden. Auf diese Weise hat der Nutzer die Möglichkeit, bei Bedarf Lichtöffnungen freizulegen, in anderen Situationen jedoch eine gute Wärmeisolierung zu erhalten.

Der Wohn-/Schlafraum weist vorzugsweise in Richtung des Hecks 7 ein Panoramafenster 10 auf. Dieses kann im dargestellten Beispiel dadurch geöffnet werden, dass die gesamte Seitenwand 28 an der Hinterseite nach oben geklappt wird. In besonders bevorzugten Ausführungsformen werden auch noch Teile der daran angrenzenden seitlichen Seitenwände 29 geöffnet, beispielsweise können sie ebenfalls nach oben geklappt werden. In anderen Ausführungsbeispielen wird nur die hintere Seitenwand 28 nach oben geklappt und bildet so ein Vordach. Im dargestellten Beispiel wird hier die Imprägnierung 30 bzw. eine äußere wasserabweisende Schicht 30 mit hochgeklappt, sodass die hintere Seitenwand beim Öffnen des Panoramafensters komplett offen ist. In anderen Ausführungsformen kann eine Fensterfolie auf der Innenseite der Seitenwand 28 vorgesehen sein, die wahlweise auch nicht mit hochgeklappt werden kann. In der nicht hochgeklappten Stellung der Seitenwand 28 können ggf. noch kleinere Abschnitte 32 der Seitenwand 28 nach innen oder außen geklappt werden, um eine kleinere Lichtöffnung bereitzustellen. Vorzugsweise können die Abschnitte 32 einer wärmeisolierenden Schicht nach innen geklappt werden, wobei eine äußere Schicht aus der Seitenwand stehen bleibt. Die äußere Schicht kann beispielsweise aus Fensterfolie gebildet sein, wie mit Bezug auf den Fensterbereich 24 beschrieben.

Bei 42 sind Zwangsbelüftungsöffnungen dargestellt. Diese können beispielsweise lediglich in der äußeren, wasserabweisenden Schicht 19 vorhanden sein, während die wärmeisolierende Schicht 20 so stark atmungsaktiv ist, dass hier keine weiteren Schlitze oder Öffnungen vorgesehen sind. In anderen Ausführungsformen weist auch die wärmeisolierende Schicht entsprechende Öffnungen auf. Gemäß einer bevorzugten Ausführungsform sind die Zwangsbelüftungsöffnungen 42 z.B. durch seitliches Verschieben eines entsprechenden Verschlusselementes (z.B. Lüftungsgitters) verschließbar.

Bei 40 ist an der Innenseite des Wandelements auf der rechten Seite eine Ablage dargestellt, in diesem Fall ein aus der Seitenwand ausklappbares Netz. Dadurch können in diesem Bereich z.B. Bücher oder andere Gegenstände abgelegt werden. In einer möglichen Ausführungsform ist die Ablage 40 so ausgelegt, dass sie auch in der unteren Fahrstellung ein gewisses Fassungsvolumen behält, also während der Fahrt nicht komplett entfernt werden muss.

Bei 34 ist eine noch andere Fensteröffnung dargestellt, welche durch ein verschiebbares Element 35 der Seitenwand der Wärmeisolierenden Schicht verschlossen werden kann. Für diese Ausführungsform ist die wärmeisolierende Schicht zumindest in diesem Bereich besonders formstabil, sodass sie entlang einer am Boden des Wohn-/Schlafraums 70 gelegenen Schiene verschoben werden kann.

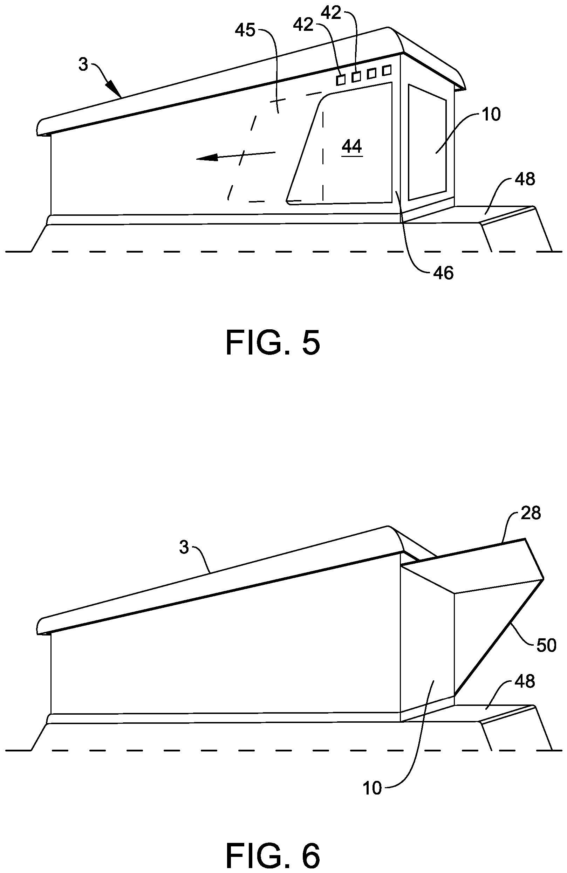

In Figur 5 ist ein Aufstelldach 2 mit einer Ausführungsform eines Panoramafensters 10 dargestellt. In diesem Fall wird vor dem Panoramafenster 10, welches sich in der Seitenwand mit der größten Höhe befindet, noch eine Dachterrasse 48 vorhanden, welche durch das Panoramafenster 10 erreicht werden kann. Insbesondere liefert die Dachterrasse 48 eine Sitzbank am Heck des Fahrzeugs. Das Panoramafenster 10 wird hier noch durch Öffnungen 44 in den angrenzenden Seitenwänden erweitert. Diese Lichtöffnungen 44 sind wiederum durch verschiebbare Elemente 45 einer formstabilen Schicht der Seitenwand öffenbar. Oberhalb der Fensteröffnung 44 sind Zwangsbelüftungsschlitze 42 angeordnet. In dieser Ausführungsform bleiben zwischen der hinteren Seitenwand und den seitlichen Seitenwänden noch Säulen 46, welche die Seitenwände stabilisieren. Diese können beispielsweise aus einem aufblasbaren Element, beispielsweise aus Drop-Stitch Material gebildet sein.

Figur 6 zeigt ein Ausführungsbeispiel eines Aufstelldaches, welches mit der Ausführungsform der Figur 5 kombiniert werden kann. Hier ist dargestellt, dass die gesamten hintere Seitenwand 28 nach oben geklappt werden kann, um ein Vordach zu bilden. Das Panoramafenster 10 bietet somit hier Zugang zu einer überdachten Loggia 48. Um die Seitenwand 28 in der aufgeklappten Stellung zu halten, ist in diesem Ausführungsbeispiel eine Stange 25 vorgesehen. In anderen Ausführungsbeispielen ist es auch möglich, die Seitenwand 28 am Dachelement 3 zu befestigen.

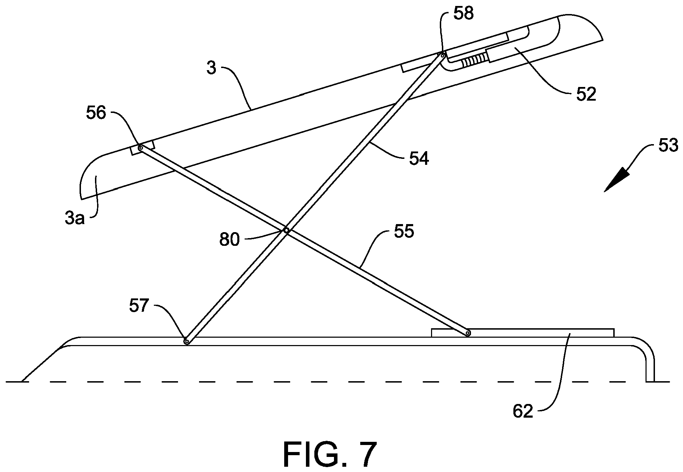

Figur 7 zeigt den Hubmechanismus 53, mit dem das Dachelement 3 aus der Fahrstellung in die aufgestellte Stellung überführbar ist, und durch welches es auch in der aufgestellten Wohn-/Schlafstellung gehalten wird. Vorzugsweise ist ein derartiger Hubmechanismus auf beiden Seiten (in Fahrtrichtung links und rechts) vorgesehen, wobei nur einer der beiden Hubmechanismen 53 einen Aktor 52 benötigt. Es können jedoch auch auf beiden Seiten entsprechende Aktoren 52 vorgesehen sein. Im dargestellten Beispiel ist der Aktor 52 ein Spindelantrieb, durch welchen die Stange 54 aus einer eingefahrenen Stellung, in welcher sie parallel zum Dachelement 3 und direkt unterhalb des Dachelements angeordnet ist, in die dargestellte, ausgefahrene Stellung verschoben wird. Die Stange 54 ist am Punkt 58 am Spindelantrieb gefestigt und kreuzt sich am Gelenk 80 mit der Gegenstange 55, welche fest aber drehbar bei 56 am Dachelement 3 befestigt ist. Auf dem Dach des Fahrzeugs ist die Stange 55 auf einer Schiene 60 verfahrbar, sodass auch sie von einer horizontalen unteren Fahrstellung in eine aufgestellte Stellung verfahrbar ist. Gemäß einer bevorzugten Ausführungsform der Erfindung befindet sich der Aktor 52 oben und insbesondere direkt unter dem Dachelement 3, sodass er idealerweise von den Rändern 3a der Dachschale 3 vor der Witterung geschützt ist

### Bezugszeichenliste

1 Freizeitfahrzeug
2 Aufstelldach
3 Dachelement
3a umlaufender Rand des Dachelements
4 Seitenwand
5 Unterschale
6 Bug
7 Heck
8 Durchgangsöffnung
9 Schiebetür
10 Panoramadach
12 Personen
13 Unterseite des Dachelements 3
15 Oberseite der Unterschale 5
16 Matratze
h Sitzhöhe
19 wasserabweisende Schicht
20 wärmeisolierende Schicht
22 Moskitonetz
24 Fensterbereich
28 hintere Seitenwand
29 Seitenwandelemente
30 wasserabweisende Schicht
34 Fensteröffnung
35 verschiebbares Element der Seitenwand
40 Ablage
42 Zwangsbelüftungsöffnungen
44 Fensterbereich
45 verschiebbares Element der Seitenwand
46 Säule
48 Dachterrasse
50 Stange
52 Aktor
53 Hubmechanismus
54, 55 Stange
56, 57 Gelenk
58 Anlenkpunkt
60 Fahrzeugdach
70 Wohn-/Schlafbereich
62 Schiene
80 Gelenk

## Patentansprüche

1. Aufstelldach (2) für ein Freizeitfahrzeug, aufweisend
a. ein Dachelement (3), welches auf einem Dach (60) eines Freizeitfahrzeugs (1) angeordnet oder anordenbar ist und aus einer unteren Fahrstellung in eine aufgestellte Wohn-/Schlafstellung überführbar ist, wobei in der aufgestellten Wohn-/Schlafstellung zwischen dem Dachelement (3) und dem Dach (60) des Freizeitfahrzeugs (1) ein Wohn-/Schlafraum (70) ausgebildet wird, welcher vom Innenraum des Freizeitfahrzeugs aus zugänglich ist,
b. zumindest eine Seitenwand (4), welche den Wohn-/Schlafraum (70) in der aufgestellten Wohn-/Schlafstellung nach außen abgrenzt,
wobei der Wohn-/Schlafraum (70) in der aufgestellten Wohn-/Schlafstellung über mindestens 2/3 seiner Fläche zumindest eine Sitzhöhe (h) aufweist, wobei die Sitzhöhe (h) zumindest 75cm, vorzugsweise zumindest 80cm, stärker bevorzugt zumindest 85cm beträgt.

2. Aufstelldach (2) nach Anspruch 1, wobei das Dachelement (3) im aufgestellten Zustand in einer Fahrtrichtung (F) des Freizeitfahrzeugs (1) schräg gestellt ist und insbesondere einen Winkel (α) von 4° bis 30°, vorzugsweise 5° bis 20°, zur Horizontalen aufweist.

3. Aufstelldach (2) nach Anspruch 2, wobei das Dachelement (3) im aufgestellten Zustand in Fahrtrichtung hinten höher ist.

4. Aufstelldach (2) nach einem der vorhergehenden Ansprüche, wobei die zumindest eine Seitenwand (4) zumindest eine formstabile und/oder wärmeisolierende Schicht (20) aufweist.

5. Aufstelldach (2) nach einem der vorhergehenden Ansprüche, wobei die zumindest eine Seitenwand (4) zumindest eine Schicht (20) aus einem selbstexpandierenden Material aufweist.

6. Aufstelldach (2) nach einem der vorhergehenden Ansprüche, wobei an der Innenseite des zumindest einen Wandelements eine Ablage (40) integriert ist, insbesondere ein Netz, eine Tasche und/oder ein ausklappbares Regalbrett.

7. Aufstelldach (2) nach einem der vorhergehenden Ansprüche, wobei die zumindest eine Seitenwand eine Zwangsbelüftungsöffnung (42) aufweist, welche insbesondere angrenzend oder in einem Abstand von weniger als 10cm vom Dachelement (3) angeordnet ist.

8. Aufstelldach (2) nach einem der vorhergehenden Ansprüche, wobei die zumindest eine Seitenwand (4) luftgefüllte Hohlkammern aufweist.

9. Aufstelldach (2) nach einem der vorhergehenden Ansprüche, wobei die zumindest eine Seitenwand (4) zumindest eine formstabile Schicht (20) aufweist und wobei in einem Fensterbereich (24) zumindest die formstabile Schicht (25a, 25b, 28, 32) der Seitenwand nach innen und/oder außen klappbar ist, insbesondere um eine im Wesentlichen horizontale Achse.

10. Aufstelldach (2) nach einem der vorhergehenden Ansprüche, welches in einer Seitenwand, insbesondere in der Seitenwand mit der größten Höhe, ein Panoramafenster (10) aufweist, welches sich zumindest über einen Großteil der Breite der Seitenwand (4) oder der Breite des Fahrzeugs erstreckt.

11. Aufstelldach (2) nach Anspruch 10, wobei das Panoramafenster (10) durch ein nach oben und/oder unten klappbares Wandelement (28) verschließbar ist, wobei das Wandelement (28) in der nach oben geklappten Stellung ein Vordach des Wohn-/Schlafbereichs (70) bildet.

12. Aufstelldach (2) nach Anspruch 10 oder 11, wobei das Panoramafenster (10) sich über die gesamte Breite einer in Fahrtrichtung vorne oder hinten liegenden Seitenwand (4) erstreckt, und wobei in den angrenzenden Bereichen der in Fahrtrichtung seitlich liegenden Seitenwände ebenfalls Fenster (44) angeordnet sind.

13. Aufstelldach (2) nach einem der vorhergehenden Ansprüche, wobei das Dachelement (3) durch einen Aktor (52), insbesondere einen Spindelantrieb oder einen pneumatischen oder hydraulischen Zylinder, aus der unteren Fahrstellung in die aufgestellte Wohn-/Schlafstellung überführbar ist, wobei der Aktor (52) im aufgestellten Zustand in einem Abstand von weniger als 10cm unterhalb des Dachelementes (3) angeordnet ist.

14. Freizeitfahrzeug mit einem Aufstelldach (2) nach einem der vorhergehenden Ansprüche, wobei das Freizeitfahrzeug (1) insbesondere ein Kastenwagen, Camper Van, Caddy oder Urban Vehicle ist.

15. Freizeitfahrzeug nach Anspruch 14, wobei in Fahrtrichtung vor oder hinter dem Wohn-/Schlafraum des Aufstelldaches (2) auf dem Dach (60) des Freizeitfahrzeugs eine Dachterrasse (48) vorhanden ist, welche vom Wohn-/Schlafraum aus zugänglich ist.
